# EUROPEAN PATENT SPECIFICATION

(11) **EP 2 568 273 B1**
(45) Date of publication and mention of the grant of the patent: **09.11.2016**
(21) Application number: 12006252.6
(22) Date of filing: 05.09.2012
(51) Int. Cl.: G01N 21/23, G01N 21/41

(54) **Measurement system for refractive index and birefringence changes caused by nonlinear effects in optical material microareas**
Einrichtung zur Vermessung der Änderung des Brechungsindex und der Doppelbrechung verursacht durch die nichtlinearen Effekte in den Mikrobereichen der optischen Materialien
Système de mesure des changements de l'indice de réfraction et de la biréfringence induits par des effets non linéaires dans les microchamps de matériaux optiques

(30) Priority: 11.09.2011 PL 39628411
(43) Date of publication of application: 13.03.2013
(73) Proprietor: Instytut Optyki Stosowanej, 03-805 Warszawa (PL)
(72) Inventor: Galas, Jacek, 05-095 Lomianki (PL); Litwin, Dariusz, 00-681 Warszawa (PL); Kozlowski, Tomasz, 00-179 Warszawa (PL); Kryszczynski, Tadeusz, 01-034 Warszawa (PL)
(74) Representative: Woznicki, Jerzy

(56) References cited:
- US-A1- 2009 161 114
- D. LITWIN ET AL: "<title>Automated variable wavelength interferometry in reflected light mode</title>", PROCEEDINGS OF SPIE, vol. 6188, 21 April 2006 (2006-04-21), pages 61880F-61880F-8, XP055156202, ISSN: 0277-786X, DOI: 10.1117/12.662238

## Description

The subject of the invention is a measurement system for refractive index and birefringence changes caused by nonlinear effects in optical material microareas to be used in optical material parameter metrology, spectroscopy, phase shift dispersion metrology and materials engineering, in nonlinear effect research in optical materials, particularly in nanomaterials.

Interferometer systems such as the Mach-Zehnder interferometer, Michelson interferometer and their variants are used in measurements of refractive index and birefringerice. The VAWI (Variable Wavelength Interferometry) polarizing-interference microscopes developed in the Institute of Applied Optics based on the variable wavelength technique are also used. The technique is described in publication "Automated variable wavenlenght interferometry in reflected light mode", D. LITWIN ET AL, PROCEEDINGS OF SPIE, vol. 6188, 21 April 2006 (2006-04-21), pages 61880F-61880F-8, XP055156202, ISSN: 0277-786X, DOI: 10.1117/12.662238.

US 7663765 patent description presents a measurement system including an image acquisition camera for two-beam technique measurements. A light beam of a specific wavelength passes through an optical system including a light-splitting element situated at the entrance of the system, polarizers and mirror system. The tested object is placed on the propagation path of one light beam. Both beams at the optical system entrance are directed to the image pickup device which records the image resulting from interference of both polarized beams and sends it to the computer which processes and analyzes the recorded data.

The known measurement techniques applied for measurements of refractive index changes caused by nonlinear effects resulting from matter interaction with high power laser impulses use "Z-Scan" systems for measurements. In these systems, a convergent high power laser light beam passes through a tested material sample. As a result of nonlinear changes of the material refractive index, convergence of the beam passing through the material changes which affects the light intensity measured by the fixed detector situated in the optical axis Z. The light intensity measurements for different positions of the sample moved along the light beam propagation direction enables you to determine the sample refractive index changes caused by nonlinear effects. The Z-Scan system allows you to measure the optical parameter changes only in macroareas which makes it impossible to be used for microobject measurements. In addition, the system measures the averaged light effect on the matter and the average nonlinear refractive index value is therefore measured.

Other single- or double-beam measurement systems for nonlinear refractive index, including interferometric systems are also known, however, they only allow the user to measure an averaged parameter in both time and space and they do not allow the user to measure nonlinear optical parameters in microareas.

A disadvantage of the known systems is that they do not allow you to measure the nonlinear refractive index and nonlinear birefringence in optical material microareas and the effect of ambient conditions on the measurement results which does not allow you to measure nonlinear parameters with sufficient accuracy.

High-resolution imaging methods are also known. They are used, among others, in nonlinear optics, spectroscopy and optical tomography based on supercontinuum generation in a system comprising a femtosecond laser, a photonic optical fibre and a camera with a wavefront analyzer. Propagation of short, femtosecond laser impulses in a photonic optical fibre allows the user to obtain a coherent and wide continuum high-resolution spectrum. These systems are not suitable for measurements of refractive and birefringence index changes caused by nonlinear effects in optical material microareas.

The purpose of the invention is to develop a modified interferometric system enabling accurate measurements of the nonlinear refractive index and nonlinear birefringence of optical materials in areas smaller than several micrometres using laser impulses.

A measurement system for refractive index and birefringence changes caused by nonlinear effects, composed of a femtosecond laser, a photonic optical fibre, an optical system including a light-splitting element and two optical channels and an interferometric system in a form of a VAWI interferometer situated in the optical axis of the measurement beam emerging from the optical system, is characterized in that the first optical channel includes a monochromator with a condenser forming the measurement beam and the monochromator at the entrance is connected to the photonic optical fibre and the second optical channel includes a mirror system including a moveable mirror adapted to change the optical path length of the second beam in the second optical channel, while the tested material is placed in the measurement area situated in the crossing of the measurement beam and the second beam delivered via the optical channel, wherein the optical filter adapted to cutoff the second beam laser light is placed between the tested material and the VAWI interferometer. The first optical channel includes a focusing element, particularly in a form of the first lens placed at the input endface of the photonic optical fibre, and the second optical channel includes the second optical fibre outfitted with an optical focusing element at its input endface, particularly in a form of the second lens.

It is advantageous to include the second mirror situated between the light-splitting element and the moveable mirror in the mirror system including the moveable mirror, whereas the moveable mirror is a rectangular system of two flat reflective surfaces.

According to the invention, the system enables a measurement of the nonlinear refractive index and nonlinear birefringence of optical materials in areas smaller than several micrometres in the area of a laser impulse passing through the tested material perpendicularly to the optical axis of the measurement beam transmitted by the monochromator towards the VAWI interferometer. In addition, the system enables a measurement of optical parameter changes caused by nonlinear effects and thermal effects caused by matter interaction with high power laser impulses, whereas the nonlinear effects and thermal effects can be distinguished. The application of the monochromator allows the user to obtain accurate spectral characteristics of the nonlinear refractive indexes and nonlinear birefringence in the entire spectrum offered by the monochromator. The laser impulses causing the nonlinear optical effects can be configured in different ways, for example, in terms of power or wavelength which allows the user to make more detailed tests with consideration given to escalation and attenuation of the observed phenomena and their correlation with the wavelength.

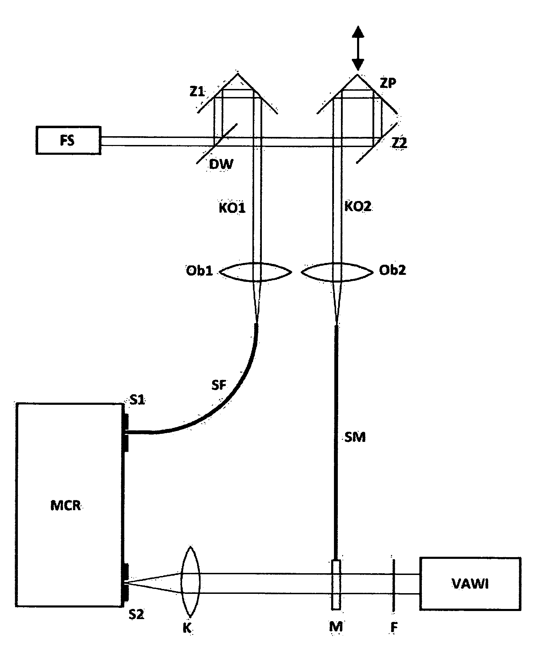

The subject of the invention is shown in the figure presenting a diagram of the refractive index and birefringence change measurement system.

As shown in the figure, the monochromatic laser light impulse beam transmitted by the femtosecond laser FS is split by the light-splitting element DW into two beams passing through the separate optical channels KO1 and KO2. The first optical channel KO1 is determined by the first laser beam path in the optical system from the light-splitting element DW to the VAWI interferometer. The second optical channel KO1 is determined by the second laser beam path in the optical system from the light-splitting element DW to the measurement area where the tested material M is placed.

On the first beam pathway, the first mirror Z1, the first lens Ob1 and the photonic optical fibre SF connected in series with the monochromator MCR fitted with the condenser K are placed. Supercontinuum generated by the photonic optical fibre SF is introduced to the monochromator MCR through the input slit S1, while the monochromatic light beam emerging from the monochromator MCR through the output slit S2 is formed by the condenser K. The measurement area where the tested material M is placed is situated after the condenser K. A monochromatic light beam, after passing through the measurement area, traverses through the optical filter F which cuts off the laser light of the second beam from the VAWI interferometer.

On the pathway of the second beam, there is the second mirror Z2, the moveable mirror ZP, the second lens Ob2 and the second optical fibre SM emitting the high-power laser light into the tested material M. The moveable mirror ZP is used to synchronize the impulses.

The tested material M is placed in the measurement area situated in the crossing of the second beam and the monochromatic light beam outgoing from the monochromator MCR, running along the optical axis of the VAWI interferometer.

The monochromatic light beam is a measurement beam analyzed in the VAWI interferometer. The light beam passing through the first optical channel KO1 is introduced by the first lens Ob1 to the photonic optical fibre SF which converts monochromatic light impulses into polychromatic light impulses, particularly white light which is called supercontinuum.

The polychromatic light emerging from the photonic optical fibre SF traverses through the input slit S1 of the tunable monochromator MCR in which it is split into different wavelengths and directed to the exit slit S2. The monochromatic light of a selected wavelength within the measurement range of the monochromator MCR emerging from the output slit S2 is converted by the condenser K into a parallel beam of monochromatic light which illuminates the tested material M.

The high-power impulses of monochromatic laser light from the second optical channel K02 are transmitted through the lens Ob2 to the second optical fibre SM which delivers them to the tested material M. The light may also be introduced to the tested material M without the second optical fibre SM. The high-power impulses from the optical channel K02 affecting the tested material M locally change its optical parameters - the refractive index and birefringence - where and when they penetrate the material.

Momentary changes of the refractive index and birefringence of the material cause momentary changes of the measurement light beam phase retardation in the microareas of the tested material M penetrated by the high-power impulses.

The measurement consists in synchronization of the light impulses from both optical channels KO1, K02 in space and time, so that both impulses come to the tested material M analyzed by the interferometer at the same time. In such a situation, the material area through which a high-power impulse passes at a given time is simultaneously illuminated by the measurement beam impulse emerging from the monochromator MCR.

The moveable mirror ZP, being a rectangular system of two flat reflective surfaces, is used for synchronization. The movement of the mirror in the direction indicated by the arrow causes a change of the optical path length traversed by the light impulses in the second optical channel K02.

After passing through the tested material M, the measurement beam approaches the automated VAWI interferometer through the filter F. Thanks to the synchronization of the impulses from both channels KO1, KO2, the interferometer records momentary changes of optical parameters caused by nonlinear effects resulting from the interaction of high-power laser light impulses with the matter.

The tunable monochromator MCR enables illumination of the tested material M with a monochromatic light beam of a preset wavelength which makes it possible to measure momentary changes of the spectral distribution of the refractive indices and birefringence over the entire spectrum of visible light, i.e. in the range from 400 to 700 nm. The application of the VAWI interferometer instead of the Z-Scan system and the photonic optical fibre SF generating supercontinuum considerably increases the measurement accuracy and enables measurements in material microareas.

## Claims

1. A measurement system for refractive index and birefringence changes caused by nonlinear effects, composed of a femtosecond laser (FS), a photonic optical fibre (SF), an optical system including a light-splitting element (DW) and two optical channels (KO1, K02) and an interferometric system in a form of a variable wavelength interferometer (VAWI) situated in the optical axis of the measurement beam emerging from the optical system, **characterized in that** the first optical channel (KO1) includes a monochromator (MCR) with a condenser (K) forming the measurement beam and the monochromator (MCR) at the entrance is connected to the photonic optical fibre (SF) and the second optical channel (K02) includes a mirror system including a moveable mirror (ZP) adapted to change the optical path length of the second beam in the second optical channel (K02), while the tested material (M) is placed in the measurement area situated in the crossing of the measurement beam and the second beam delivered via the optical channel (K02), wherein the optical filter (F) adapted to cutoff the second beam laser light is placed between the tested material (M) and the VAWI interferometer, the first optical channel (KO1) includes a focusing element, particularly in a form of the first lens (Ob1) placed at the input endface of the photonic optical fibre (SF), and the second optical channel (K02) includes the second optical fibre (SM) outfitted with an optical focusing element at its input endface, particularly in a form of the second lens (Ob2).

2. The system according to claim 1, wherein the mirror system with the moveable mirror (ZP) includes the second mirror (Z2) situated between the light-splitting element (DW) and the moveable mirror (ZP), while the moveable mirror (ZP) is a rectangular system of two flat reflective surfaces.

## Patentansprüche

1. Ein System zur Messung der Veränderung von Brechung und Doppelbrechung, die durch nichtlineare Effekte hervorgerufen sind, zusammengesetzt aus einem Femtosekundenlaser (FS), photonischen Lichtleiter (SF), einem optischen System mit Lichtteilungselement (DW) sowie zwei optischer Kanäle (KO1, KO2), und einer Anordnung zur Messung der Interferenz in der Form eines Polarisationsinterferometers (VAWI) der in der optischen Achse des Lichtkegels, der das optische System verlässt, lokalisiert ist, **dadurch gekennzeichnet, dass** ein Bestandteil des ersten optischen Kanals (KO1) ein Monochromator (MCR) mit einem Kondensor (K) ist, dass den gemessenen Lichtkegel formt, wobei der Monochromator (MCR) am Eingang mit dem photonischen Lichtleiter verbunden ist (SF), ein Bestandteil der zweiten optischen Kanal (KO2) ist dagegen eine Anordnung der Spiegel, die einen verschiebbaren Spiegel (ZP) enthält, die die Länge des optischen Wegs des zweiten Lichtkegels in dem zweiten optischen Kanal (K02) verändert, wobei das untersuchte Material (M) in der Messzone lokalisiert ist, die im Schnittpunkt des gemessenen Kegels und des zweiten, mit dem optischen Kanal (K02) zugeführten Kegels befindlich ist, außerdem ist zwischen dem untersuchen Material (M) und Interferometer VAWI ein optischer Filter (F) angeordnet, das das Laserlicht des zweiten Kegels abbrennt, ein Bestandteil des ersten, optischen Kanals (KO1) ein Sammelelement am Eingang des photonischen Lichtleiters (SF) ist, insbesondere in der Form der ersten Linse (Ob1), und ein Bestandteil des zweiten optischen Kanals (K02) ein zweiter Lichtleiter (SM) ist, der an Eingang mit einem optischen Sammelelement, insbesondere in der Form einer zweiten Linse (Ob2) versehen ist.

2. Ein System nach dem Anspruch 1, **dadurch gekennzeichnet, dass** eine Anordnung der Spiegel, die einen verschiebbaren Spiegel (ZP) beinhaltet, auch mit einem zweiten Spiegel (Z2) versehen ist, die zwischen dem Lichtteilungselement (DW) und dem verschiebbaren Spiegel (ZP), angeordnet ist, wobei der verschiebbare Spiegel (ZP) ein rechteckiges System zweier flachen reflektierende Flächen ist.

## Revendications

1. Un appareil de mesure des variations de l'indice de réfraction et de la biréfringence causées par les effets non linéaires, constitué d'un laser femtoseconde (FS), d'une fibre optique à cristaux photoniques (SF), d'un système optique comprenant un séparateur de lumière (DW), deux canaux optiques (KO1. K02) et d'un système d'interférométrie composé d'un interféromètre à polarisation (KAWI) disposé dans l'axe optique du faisceau de mesure en sortie du système optique, **caractérisé par le fait que** dans la composition du premier canal optique (KO1) entre un monocluromateur (MCR) avec condenseur (K) formant le faisceau de mesure, ou le monochromateur (MCR) est reliée à l'entrée de la fibre optique à cristaux photoniques (SF), dans la composition du second canal optique (KO2) entre un système de miroirs comprenant un miroir coulissant (ZP) qui sert à modifier la longueur du trajet optique du second faisceau du second canal optique (K02) et ou le matériau analysé (M) est placé dans une zone située à l'intersection du faisceau de mesure et du second faisceau relié au canal optique (KO2) qui plus est, entre le matériau analysé (M) et l'interféromètre VAWI, il y a un filtre optique (F) absorbant la lumière laser émise par le second faisceau, dans la composition du premier canal optique (KO1) il y a une unité de focalisation formée principalement d'une première lentille (Ob1) disposée à l'entrée de la fibre optique à cristaux photoniques (SF) et dans la composition du second canal optique (KO2) il y a une seconde fibre optique (SM) équipée à l'entrée d'une unité de focalisation, principalement constituée d'une seconde lentille (Ob2).

2. L'appareil selon la revendication 1, se **caractérise par le fait que** dans le système de miroir comprenant le miroir coulissant (ZP), entre un second miroir (Z2) située entre le séparateur de lumière (DW) et le miroir coulissant (ZP) où le miroir coulissant (ZP) forme un système de deux surfaces réfléchissantes planes et rectangulaires.
